# EUROPEAN PATENT APPLICATION

(11) **EP 4 685 362 A1**
(43) Date of publication of application: **28.01.2026**
(21) Application number: 24191015.7
(22) Date of filing: 25.07.2024
(51) Int. Cl.: F16D 1/05, F16D 1/10

(54) **SHAFT TO SHAFT COUPLING ARRANGEMENT**

(71) Applicant: Garrett Transportation I Inc., Torrance, CA 90504 (US)
(72) Inventor: Mach, Zdenek, Torrance, 90504 (US); Petr, David, Torrance, 90504 (US); Slama, David, Torrance, 90504 (US); Tomanec, Filip, Torrance, 90504 (US); Borra, Amarnadh, Torrance, 90504 (US)
(74) Representative: Ingrassia, Fisher & Lorenz UK Ltd.

(57) **Abstract**

A system for coupling a first shaft (105) to a second shaft (135). Each shaft includes a set of splines and a conical surface. The sets of splines are configured to engage with each other and the conical surfaces are configured to engage with each other so as to improve the alignment between the first shaft and the second shaft when an axial force is applied to one of the shafts with a force applicator (150).

## Description

### TECHNICAL FIELD

The technical field generally relates to an arrangement for connecting a first shaft to a second shaft, and, more particularly, relates to an arrangement for connecting a rotor shaft of a traction motor to a gearbox shaft of a gearbox assembly.

### BACKGROUND

The use of traction motors, is increasingly prevalent in various industries, such as the automotive industry. Electric vehicles, for example, rely upon traction motors within an electric vehicle powertrain (EVPT) as a source of wheel propulsion.

Traction motors transform electrical energy into mechanical energy. Typically, a conventional traction motor comprises a stator that includes windings through which an electrical current can be passed, and a rotor including a rotor shaft which is disposed within the stator. When the windings of the stator receive an electrical current, for example via a battery or other such power source, a magnetic field is generated within the stator. This magnetic field interacts with a magnetic field associated with the rotor, for example a magnetic field which exists due to magnets included in the rotor. The interaction of these magnetic fields causes the rotor to rotate within the stator. This rotation is used to apply torque to mechanical components, such as vehicle wheels via a gearbox assembly.

Gearbox assemblies are typically used in electric vehicles as reduction gearboxes to convert the higher-speed, lower-torque output of the traction motor to a lower-speed, higher-torque output suitable for applying torque to the electric vehicle's wheels.

Importantly, the rotor shaft of the traction motor should be aligned with the input shaft of the gearbox in order to allow for a smooth transfer of rotational motion without causing undue stress or wear on either of these shafts. It is desirable to provide improved techniques for connecting the rotor shaft of a traction motor to the input shaft of the gearbox in order to reduce the wear on these shafts whilst ensuring that the connection is both robust and efficient to manufacture. Furthermore, other desirable features and characteristics of the present invention will become apparent from the subsequent detailed description and the appended claims, taken in conjunction with the accompanying drawings and the foregoing technical field and background. In particular, it is noted that the techniques described herein may allow for improved alignment of other types of shaft-to-shaft connections, such as connections in gear arrangements or connections in drive shaft arrangements.

### SUMMARY

According to a first aspect, there is provided a system for coupling a first shaft to a second shaft, the first shaft comprising a first set of splines; and a first conical surface having a first taper angle and the second shaft comprising a second set of splines; and a second conical surface having a second taper angle, the second taper angle being opposite to the first taper angle. The first set of splines is configured to engage with the second set of splines to form a splined connection, wherein the first conical surface is configured to engage with the second conical surface to form a conical centering arrangement configured to align a longitudinal axis of the first shaft with a longitudinal axis of the second shaft when an axial force is applied to at least one of the first shaft and the second shaft; and a force applicator configured to apply the axial force to at least one of the first shaft and the second shaft.

According to embodiments, the first shaft is a rotor shaft of a traction motor and the second shaft is a gearbox shaft of a gearbox assembly.

According to embodiments, the force applicator comprises a spring, such as a leaf spring, a disc spring or a coil spring. In alternative embodiments, the force applicator comprises another component that is able to provide a compressive force, such as a compressible bushing.

According to embodiments, the system comprises a first bearing connected to one of the first shaft or the second shaft, the first bearing comprising a first bearing inner race and a first bearing outer race, wherein the force applicator is configured to directly apply the axial force to the first bearing outer race and wherein the first bearing is configured to transfer the axial force to the one of the first or second shaft via the first bearing inner race. Optionally, the system comprises a second bearing having a second bearing inner race and a second bearing outer race, the second bearing being disposed about the conical centering arrangement. Further optionally, the second bearing inner race abuts against a shoulder disposed on an exterior surface of either the first shaft or the second shaft and the second bearing outer race abuts against a shoulder such that a portion of the axial force applied by the force applicator is transferred to the second bearing to reduce tolerances within the second bearing.

According to embodiments, the first set of splines and the first conical surface are disposed on an exterior surface of the first shaft, wherein the second shaft has a hollow section, and wherein the second set of splines and the second conical surface are disposed on an interior surface of the hollow section of the second shaft.

According to embodiments, the first taper angle is between around 1:5 and around 1:15, optionally around 1:10.

According to embodiments, the axial force applied by the force applicator is between around 300N to 500N, optionally around 400N.

According to a second aspect, there is provided a system for coupling a rotor shaft of a traction motor to a gearbox shaft of a gearbox assembly of an electric vehicle, the rotor shaft comprising: a first set of splines; and a first conical surface having a first taper angle; the gearbox shaft comprising: a second set of splines; and a second conical surface having a second taper angle, the second taper angle being opposite to the first taper angle. The first set of splines is configured to engage with the second set of splines to form a splined connection. The first conical surface is configured to engage with the second conical surface to form a conical centering arrangement configured to align a longitudinal axis of the rotor shaft with a longitudinal axis of the gearbox shaft when an axial force is applied to the gearbox shaft due to operation of the electric vehicle in either a drive mode or a regeneration mode

According to embodiments, the system comprises a first bearing connected to one of the rotor shaft and the gearbox shaft.

According to embodiments, the system further comprises a second bearing disposed about the conical centering arrangement.

According to embodiments, the first set of splines and the first conical surface are disposed on an exterior surface of the rotor shaft, wherein the second shaft has a hollow section, and wherein the second set of splines and the second conical surface are disposed on an interior surface of the hollow section of the gearbox shaft.

According to embodiments, the first taper angle is between around 1:5 and around 1:15, optionally around 1:10

According to a third aspect, there is provided an electric vehicle powertrain comprising a system as described above.

### BRIEF DESCRIPTION OF DRAWINGS

The various embodiments will hereinafter be described in conjunction with the following drawings, wherein like numerals denote like elements, and wherein:
FIG. 1 is a schematic of a conventional coupling between a rotor shaft and a gearbox shaft;
FIG. 2 shows a splined connection not in accordance with the invention;
FIG. 3 shows a first embodiment of a system for coupling a rotor shaft to a gearbox shaft;
FIG. 4A shows a first view of a lubrication system in accordance with embodiments of the invention;
FIG. 4B shows a second view of the lubrication system of FIG. 4A;
FIG. 5A shows a second embodiment of a system for coupling a rotor shaft to a gearbox shaft; and
FIG. 5B also shows the second embodiment of a system for coupling a rotor shaft to a gearbox shaft

### DETAILED DESCRIPTION

The following detailed description is merely exemplary in nature and is not intended to limit the application and uses of embodiments of the present disclosure. Furthermore, there is no intention to be bound by any expressed or implied theory presented in the preceding introduction, brief summary or the following detailed description. Embodiments of the present disclosure may be described herein in terms of functional and/or logical block components and various method steps. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to certain functions of e-machines (and the individual operating components of e-machines) may not be described in detail herein. Furthermore, the connecting lines shown in the various figures contained herein are intended to represent example functional relationships and/or physical couplings between the various elements. It should be noted that alternative or additional functional relationships or physical connections may be present in an embodiment of the present disclosure.

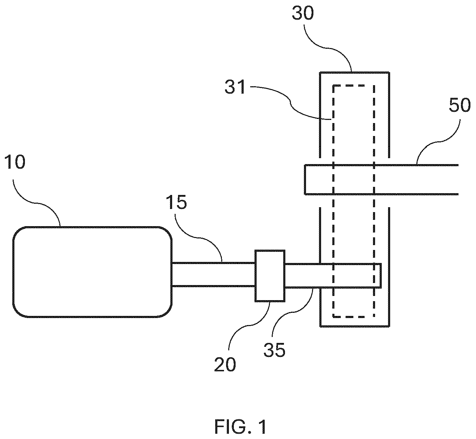

In electric vehicles, a traction motor may be used to provide torque to the vehicle's wheels. An arrangement showing how a traction motor may be used to provide torque to the vehicle's wheels is shown in FIG. 1. In FIG. 1, a traction motor 10 includes a rotor shaft 15. The rotor shaft 15 is connected to a gearbox shaft 35 via a coupling 20. As the rotor shaft 15 rotates, the rotor shaft 15 causes the gearbox shaft 35 to rotate due to the connection between these shafts formed by the coupling 20. The gearbox shaft 35 is partially disposed within a gearbox assembly 30. As the gearbox shaft 35 rotates, the gearbox shaft 35 drives a gearing arrangement 31 within the gearbox assembly 30. Typically, the gearing arrangement 31 is configured to convert a higher-speed, lower torque output of the traction motor 10 to a lower-speed, higher-torque output suitable for applying torque to the electric vehicle's wheels (not shown in this figure) via a driveshaft 50.

It is desirable to have a smooth transfer of rotational motion between the rotor shaft 15 of the traction motor 10 and the gearbox shaft 35 of the gearbox assembly 30 without causing any undue stress or increased wear on either shaft. The coupling 20 between these shafts may be formed using an adapter plate or other such intermediate arrangement that transfers rotational motion between these two shafts using an additional component. However, the introduction of additional components into the arrangement for coupling the rotor shaft 15 to the gearbox shaft 35 introduces additional complexity into the assembly and may also increase manufacturing time and costs. Other types of couplings that may be used to couple the rotor shaft 15 to the gearbox shaft 36 include keyed couplings, clamp couplings and disc couplings.

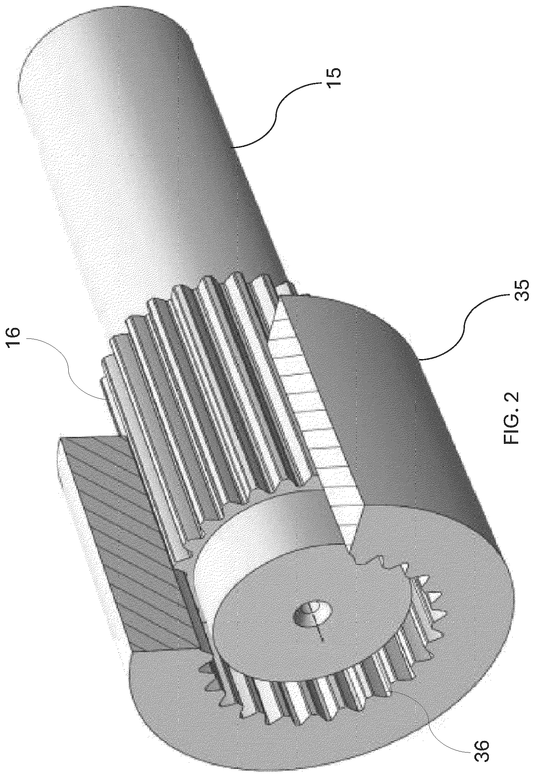

Alternatively, a spline connection may be used as the coupling 20 to couple the rotor shaft 15 to the gearbox shaft 35. A spline connection coupling is shown in FIG. 2. With such a spline connection, the rotor shaft 15 would include a first set of splines 16 disposed on an exterior surface thereon. The gearbox shaft 36 would include a hollow section and would include a second set of splines 36 disposed on an interior surface thereon. The first set of splines 16 would mesh with the second set of splines 36 to allow for a smooth transition of rotational force from the rotor shaft 15 to the gearbox shaft 35 via the meshed splines 16, 36.

However, use of a spline connection requires a high degree of alignment between the rotor shaft 15 and the gearbox shaft 35 in order to avoid damage or wear to the splines of the first set of splines 16 and the second set of splines 36. Obtaining a high degree of alignment between the rotor shaft 15 and the gearbox shaft 35 requires high manufacturing precision techniques and may therefore be difficult to achieve with less costly and less time-consuming lower-precision manufacturing techniques that would otherwise improve the ease of manufacture of the coupling 20.

After a review of the available types of couplings for coupling one shaft to another shaft in the required manner, the present inventors recognized that a particularly advantageous coupling could be realized, without the need for high precision manufacturing techniques, by forming a direct connection between a first shaft and a second shaft, the direct connection including conical centering surfaces for aligning the first shaft and the second shaft with respect to one another, where the coupling also includes a spline connection between the first shaft and the second shaft.

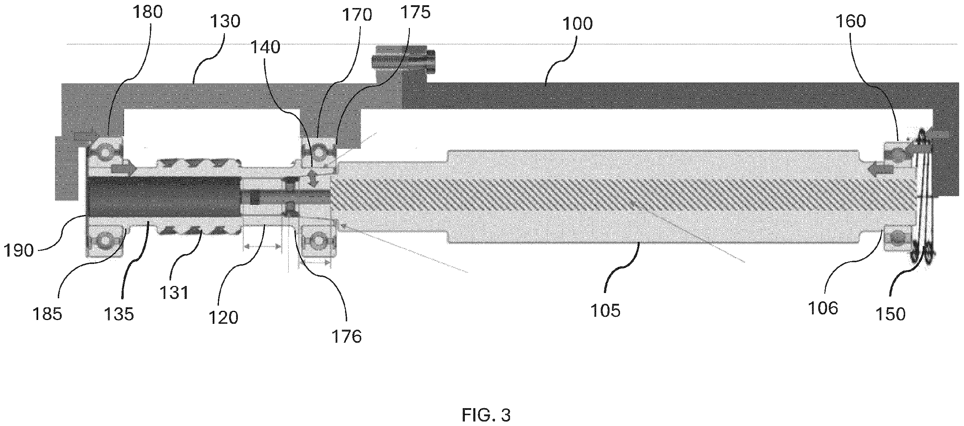

An embodiment of a system for coupling a first shaft to a second shaft, for example a rotor shaft to a gearbox shaft, in accordance with embodiments of the present invention is shown in FIG. 3. Whilst the below explanation will be set out with respect to coupling a rotor shaft of a traction motor to a gearbox shaft, it will be appreciated that the techniques described herein are applicable to other types of couplings in which a first shaft needs to be coupled to a second shaft such that the longitudinal axes of the shafts align and in which rotational motion needs to be transferred between the first and second shafts, for example as may arise in gear train systems, drive shaft systems and/or turbocharger systems. Nevertheless, it should be appreciated that such an arrangement is particularly useful for coupling the rotor shaft of a traction motor to a gearbox shaft due to the typical positioning of the gearbox assembly to the traction motor in types of electric vehicles.

The system shown in FIG. 3 includes a traction motor 100 including a rotor shaft 105 partially disposed therein. The traction motor 100 is connected to a gearbox assembly 130. A gearbox shaft 135 is disposed within the gearbox assembly 130. A region 131 of the gearbox shaft 135 is configured to interact with a gearing arrangement (not shown in this figure) that may be directly or indirectly coupled to a driveshaft (not shown in this figure). The rotor shaft 105 is configured to directly couple with the gearbox shaft 135 via a splined connection 120, in which splines (not shown) on an exterior surface of the rotor shaft 105 engage with splines (not shown) on an interior surface of a hollow section of the gearbox shaft 135. The splined connection 120 may be formed over a finite longitudinal distance along each of the gearbox shaft 135 and the rotor shaft 105, which finite longitudinal distance is shown through the use of arrows in FIG. 3. It will be appreciated that a reverse configuration of the above arrangement is possible, where splines on an interior surface of a hollow section of the rotor shaft 105 instead engage with splines on an exterior surface of the gearbox shaft 135.

Proximate to the splined connection 120 is a conical centering arrangement 140. The conical centering arrangement 140 is formed from a tapered conical surface present on the interior surface of the gearbox shaft 135 and from a complementarily tapered conical surface on the exterior surface of the rotor shaft 105. The tapered conical surfaces present on both the interior surface of the gearbox shaft 135 and the exterior surface of the rotor shaft 105 are configured to engage with one another and, through application of an axial force, will act to apply a centering force to the rotor shaft 105 and the gearbox shaft 135 in order to improve the alignment between the respective longitudinal axes of these shafts. The direction of this centering force is shown in FIG. 3 through the use of a double-arrow extending through each of the tapered surfaces. It will be appreciated that a reverse configuration of the above arrangement is possible, where the conical centering arrangement 140 is formed from a tapered conical surface present on an exterior surface of the gearbox shaft 135 and from a complementarily tapered conical surface on an interior surface of the rotor shaft 105.

In embodiments, the taper of the tapered conical surfaces has between about a 1:5 and 1: 15 taper ratio, for example about a 1:10 taper ratio. A taper ratio of this amount has been determined to allow for improved alignment between the longitudinal axes of the rotor shaft 105 and the gearbox shaft 135 without introducing large frictional forces into the conical centering arrangement 140 that could negatively affect the efficiency of the coupling.

In order to apply the axial centering force to the conical centering arrangement 140, a force applicator, for example a spring 150, is provided. In FIG. 3, the spring 150 is shown as being disposed at one end of the rotor shaft 105 and connected to the housing of the traction motor 100. However, in alternative arrangements, the spring 150 may be disposed at an end of the gearbox shaft 135 and connected to the housing of the gearbox assembly 130.

The spring 150 is pre-compressed before the spring 150 is connected to the rotor shaft 105 or the gearbox shaft 135, such that the spring 150 applies an axial force to either the rotor shaft 105 or the gearbox shaft 135, respectively. In the embodiment shown in FIG. 3, the spring 150 is configured to urge the rotor shaft 105 toward the gearbox shaft 135. In embodiments, the spring 150 is pre-compressed to an extent such that, when the spring 150 is installed into the assembly, the spring 150 applies a force of between around 300N and 500N to the rotor shaft 105 of the gearbox shaft 135, for example around 400N.

In the embodiment shown in FIG. 3, the axial force is indirectly applied by the spring 150 to the rotor shaft 105. In particular, the centering spring 150 is configured to apply an axial force to an outer race of a first bearing 160, the first bearing 160 also having an inner race which abuts against a first shoulder 106 of the rotor shaft 105. By advantageously applying the axial force generated by the pre-compressed centering spring 150 to the outer race of the first bearing 160 and using the inner race of the first bearing 160 to transfer the axial force to the rotor shaft 105, tolerances in the bearing arrangement of the first bearing 160 may also be advantageously minimized to ensure that there is firm contact between rolling surfaces in the first bearing 160. This arrangement therefore also improves the manufacturing efficiency of bearings to be included in the system, by allowing for these bearings to be manufactured with larger tolerances.

The axial force applied to the first bearing 160 by the centering spring is transferred, via the first shoulder 106, to the rotor shaft 105, which urges the rotor shaft 105 towards the gearbox shaft 135. The force applied to the rotor shaft 105 is transmitted along the rotor shaft 105 and causes the opposing tapered conical surfaces of the conical centering arrangement 140 to align the longitudinal axes of the rotor shaft 105 and the gearbox shaft 135 with respect to each other.

In embodiments, the conical centering arrangement 140 is advantageously positioned within a second bearing 170, where the second bearing 170 is located at a fixed position within the gearbox 130 by means of a locating shoulder 175 contacting an outer race of the second bearing. By positioning the conical centering arrangement 140 within the second bearing 170, which has a fixed position within the gearbox 130, it is possible to still further improve the alignment between the rotor shaft 105 and the gearbox shaft 135, since the rotor shaft 105 and the gearbox shaft 135 are each constrained from deviating away from a common longitudinal axis by the second bearing 170.

An inner race of the second bearing 170 also abuts against a second shoulder 176 located on an exterior surface of the gearbox shaft 135. The inclusion of the locating shoulder 175 and the a second shoulder 176 which abuts against opposite sides of the second bearing 170, on the outer and inner races of the second bearing 170, respectively, also allows for tolerances in the second bearing to be reduced in a similar manner as described above with respect to the first bearing 160.

A third bearing 180 is positioned at an end of the gearbox shaft 135, which third bearing 180 surrounds and supports an end of the gearbox shaft 135. A first side of the third bearing 180 abuts against a third shoulder 185 located on an exterior surface of the gearbox shaft 135. In particular, a first side of an inner race of the third bearing 180 abuts against the third shoulder 185 located on the exterior surface of the gearbox shaft 135. An outer race of the third bearing 180 abuts against a reaction surface 190. In an embodiment, the reaction surface 190 may be formed from the housing of the gearbox assembly 130. In use, the spring 150 provides the axial centering force that causes the opposing conical mating surfaces in the conical centering arrangement 140 to improve the alignment between the longitudinal axes of the rotor shaft 105 and the gearbox shaft 135. Additionally, this same axial centering force provided by the spring 150 causes the third shoulder 185 to transmit a force to the third bearing 180. The force upon the third bearing 180 is transmitted to the reaction surface 190, which provides a reaction force to the opposite side of the third bearing. The reaction force is transmitted through the gearbox shaft to the second shoulder 176 and to the outer race of the second bearing 170.

The application of the axial centering force by the spring 150 therefore not only allows for improved alignment between the longitudinal axes of the rotor shaft 105 and the gearbox shaft 135 via the conical centering arrangement 140, but also causes each of the first, second and third bearings 160, 170, 180 to be "squeezed" between various components. This "squeezing" of each of the first, second and third bearings 160, 170, 180 allows for a reduction in the tolerances present in each of the bearings and ensures good contact between rolling surfaces of these bearings, thereby improving the manufacturing efficiency of the bearings by allowing these bearings to be manufactured with lower tolerances.

In order to provide lubrication to the splined connection 120, at least one of the rotor shaft 105 and the gearbox shaft 135 may be provided with a lubrication hole (not shown). The lubrication hole is fluidically connected to both of the splined connection 120 and a lubricant supply (not shown) and is configured to operably supply lubricant from the lubricant supply to the splined connection 120. The lubricant supply may also be operably connected to supply lubricant to one or more of first, second and third bearings 160, 170, 180.

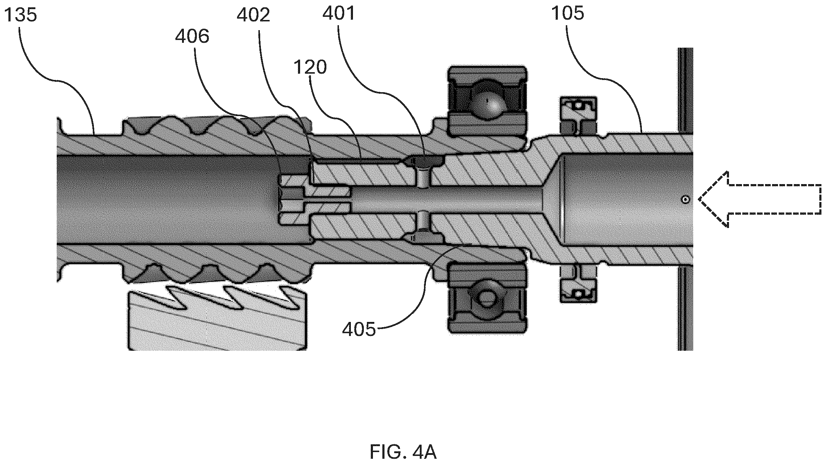

The lubrication system is shown in more detail in FIG. 4A. Lubricant, for example oil, may flow through an interior of the rotor shaft 105, as shown in FIG. 4A through the use of a dashed arrow. The lubricant may pass through one or more first lubrication holes 401 to be distributed to the splines and may also pass through a second lubrication hole 402 to an interior of the gearbox shaft 135 and subsequently back to a lubricant sump (not shown in this figure), which may comprise an oil sump. Lubricant passing through the one or more first lubrication holes 401 may be guided via one or more lubricant grooves 405 in order to be evenly distributed over an exterior portion of the rotor shaft 105 and subsequently back to the lubricant sump in a first direction and to the splines in a second direction. After lubricant passes through the splines, it flows to the interior of the gearbox shaft and subsequently back to the lubricant sump. The provision of two directions for lubricant flow for lubricant passing through the one or more first lubrication holes allows for an even distribution of lubricant around and through the splined connection 120.

In order to tailor the amount of lubricant passing through the one or more first lubrication holes 401 and the second lubrication hole 402, the second lubrication hole 402 is provided with a tunable lubricant plug 406. The tunable lubricant plug 406 is configured to control the amount of lubricant which passes through the second lubrication hole 402, for example by partially obstructing the second lubrication hole 402. In embodiments, the tunable lubricant plug 406 may comprise a through-hole to allow lubricant to pass therethrough and consequently pass through the second lubrication hole 402. The tunable lubricant plug 406 may be replaced with a different tunable plug 406 with a larger or smaller through-hole is required for optimum lubrication distribution through the one or more first lubrication holes 401 and the second lubrication hole 402. In an alternative embodiment, the tunable plug 406 may have a variable through-hole size that may be altered to optimize the lubrication distribution through the one or more first lubrication holes 401 and the second lubrication hole 402.

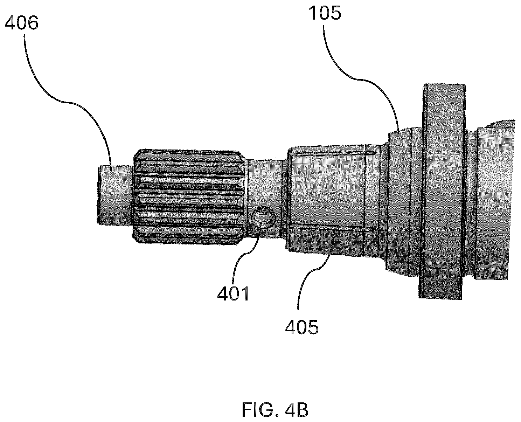

An alternative view of the lubrication system is shown in FIG. 4B, which does not show the gearbox shaft connected to the rotor shaft 135. As can be seen in FIG. 4B, lubricant may pass through the one or more lubrication holes 401 and flow toward both the exterior of the rotor shaft 105 via the lubricant grooves 405 and toward the splines. The tunable plug 406 is also shown in FIG. 4B. Such an arrangement allows for an even lubricant distribution across the components of the system.

It has also been recognized by the present inventors that additional axial forces will be introduced into the system during operation. For example, during an electric vehicle "drive" mode, an additional axial force is transmitted to the gearbox shaft 135, in the direction away from the rotor shaft 105. This additional axial force acts to further "squeeze" the third bearing 180 between the third shoulder 185 and the reaction surface 190. As another example during an electric vehicle "regeneration" mode, an additional axial force is transmitted to the gearbox shaft 135 in the direction toward the rotor shaft 105. This additional axial force acts to further "squeeze" the second bearing 170 between the second shoulder 176 and the locating shoulder 175.

The inventors recognized that the introduction of these additional axial forces during operation may cause undesirable wear in the bearings of the system. After investigative efforts, it was determined that an axial force applied by the centering spring of between around 300N to 500N, for example 400N, allows for tolerances of the bearings to be minimized without the bearings being placed under undesirably high axial loads during operation.

The present inventors also recognized that the axial forces introduced into the system during operation can partially replace the function of the spring 150 in providing an axial force, depending upon the direction of the axial force.

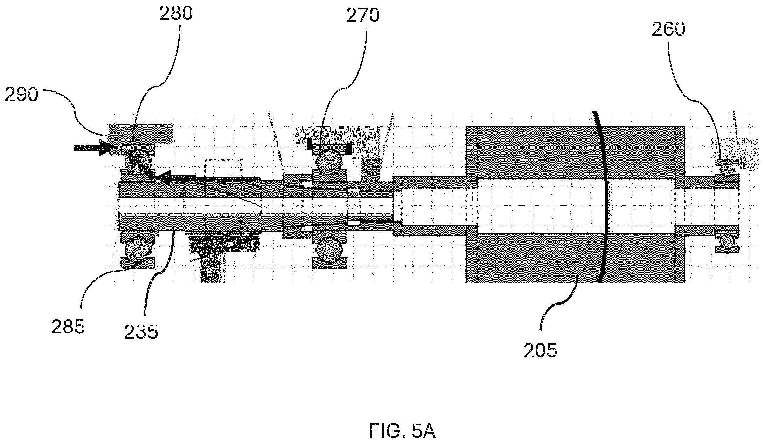

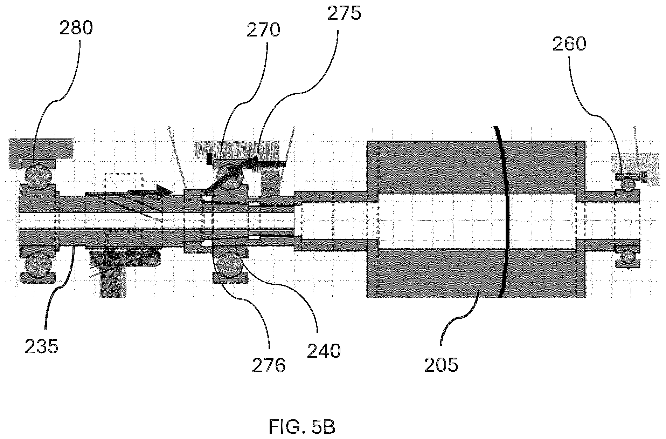

Recognition of this led to the development of the alternative embodiment shown in FIGs. 5A and 5B, in which embodiment no spring is present, and in which embodiment tolerances of first, second and third bearings 260, 270, 280 can be reduced and the alignment of a rotor shaft 205 with a gearbox shaft 235 can be improved via the axial forces introduced into the system during operation of the electric vehicle.

As shown in FIG. 5A, during an electric vehicle "drive" mode, an axial force, shown using arrows, is transmitted to the gearbox shaft 235, in the direction away from the rotor shaft 205. The axial force acts to "squeeze" the third bearing 280 between a fourth shoulder 285 and a reaction surface 290.

As another example, as shown in FIG. 5B, during an electric vehicle "regeneration" mode, an axial force, shown using arrows, is transmitted to the gearbox shaft 235 in the direction toward the rotor shaft 205. This axial force acts to "squeeze" the second bearing 270 between a second shoulder 276 and a third shoulder 275. Furthermore, this axial force acts to improve the alignment between the longitudinal axes of the gearbox shaft 235 and the rotor shaft 205 via the conical centering arrangement 240 in the same manner as described above with respect to the first embodiment.

While at least one exemplary embodiment has been presented in the foregoing detailed description, it should be appreciated that a vast number of variations exist. In particular, it is noted that the coupling techniques described in this application are applicable to other shaft to shaft couplings in which rotational motion from one shaft must be transferred to the other shaft, such as those that may occur in drive shaft or gear train assemblies. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A system for coupling a first shaft to a second shaft, the first shaft (105) comprising:
a first set of splines; and
a first conical surface having a first taper angle;
the second shaft (135) comprising:
a second set of splines; and
a second conical surface having a second taper angle, the second taper angle being opposite to the first taper angle,
wherein the first set of splines is configured to engage with the second set of splines to form a splined connection (120), wherein the first conical surface is configured to engage with the second conical surface to form a conical centering arrangement (140) configured to align a longitudinal axis of the first shaft with a longitudinal axis of the second shaft when an axial force is applied to at least one of the first shaft and the second shaft; and
a force applicator (150) configured to apply the axial force to at least one of the first shaft and the second shaft.

2. The system of Claim 1, wherein the first shaft (105) is a rotor shaft of a traction motor (100) and the second shaft (135) is a gearbox shaft of a gearbox assembly (130).

3. The system of Claim 1 or 2, wherein the force applicator comprises a spring.

4. The system of any preceding claim, wherein the system comprises a first bearing (160) connected to one of the first shaft or the second shaft, the first bearing comprising a first bearing inner race and a first bearing outer race, wherein the force applicator is configured to directly apply the axial force to the first bearing outer race and wherein the first bearing is configured to transfer the axial force to the one of the first or second shaft via the first bearing inner race.

5. The system of Claim 4, wherein the system comprises a second bearing (170) having a second bearing inner race and a second bearing outer race, the second bearing being disposed about the conical centering arrangement (140).

6. The system of Claim 5, wherein the second bearing inner race abuts against a shoulder (176) disposed on an exterior surface of either the first shaft or the second shaft and the second bearing outer race abuts against a locating shoulder (175) such that a portion of the axial force applied by the force applicator is transferred to the second bearing to reduce tolerances within the second bearing.

7. The system of any preceding claim, wherein the first set of splines and the first conical surface are disposed on an exterior surface of the first shaft (105), wherein the second shaft (135) has a hollow section, and wherein the second set of splines and the second conical surface are disposed on an interior surface of the hollow section of the second shaft.

8. The system of any preceding claim, wherein the first taper angle is between around 1:5 and around 1:15, optionally around 1:10.

9. The system of any preceding claim, wherein the axial force applied by the force applicator (150) is between around 300N to 500N, optionally around 400N.

10. A system for coupling a rotor shaft of a traction motor to a gearbox shaft of a gearbox assembly of an electric vehicle,
the rotor shaft (205) comprising:
a first set of splines; and
a first conical surface having a first taper angle;
the gearbox shaft (235) comprising:
a second set of splines; and
a second conical surface having a second taper angle, the second taper angle being opposite to the first taper angle,
wherein the first set of splines is configured to engage with the second set of splines to form a splined connection, wherein the first conical surface is configured to engage with the second conical surface to form a conical centering arrangement configured to align a longitudinal axis of the rotor shaft with a longitudinal axis of the gearbox shaft when an axial force is applied to the gearbox shaft due to operation of the electric vehicle in either a drive mode or a regeneration mode.

11. The system of Claim 10, wherein the system comprises a first bearing (260) connected to one of the rotor shaft and the gearbox shaft.

12. The system of Claim 11, wherein the system further comprises a second bearing (270) disposed about the conical centering arrangement.

13. The system of Claim 11 or 12, wherein the first set of splines and the first conical surface are disposed on an exterior surface of the rotor shaft (205), wherein the gearbox shaft (235) has a hollow section, and wherein the second set of splines and the second conical surface are disposed on an interior surface of the hollow section of the gearbox shaft.

14. The system of any of Claims 10 to 13, wherein the first taper angle is between around 1:5 and around 1:15, optionally around 1:10.

15. An electric vehicle powertrain comprising a system according to any preceding claim.
